# FASCICULE DE BREVET EUROPEEN

(11) **EP 1 230 508 B1**
(45) Date de publication et mention de la délivrance du brevet: **09.03.2005**
(21) Numéro de dépôt: 00979734.1
(22) Date de dépôt: 15.11.2000
(51) Int. Cl.: F16L 59/04

(54) **PROCEDE POUR APPLIQUER UNE COUCHE ISOLANTE SUR UNE SURFACE D'UN OBJET ET PRODUIT ISOLE CORRESPONDANT**
VERFAHREN ZUR AUFBRINGUNG EINER ISOLATIONSSCHICHT AUF DIE OBERFLÄCHE DES ZU ISOLIERENDEN OBJEKTS
METHOD FOR APPLYING AN INSULATING LAYER ON A SURFACE OF AN OBJECT AND CORRESPONDING INSULATED OBJECT

(30) Priorité: 18.11.1999 FR 9914518
(43) Date de publication de la demande: 14.08.2002
(73) Titulaire: SAINT-GOBAIN ISOVER, 92400 Courbevoie (FR)
(72) Inventeur: VOISIN, François, F-78810 Feucherolles (FR); LEPONT, Marc, F-60290 Cambronne les Clermont (FR); DUPOUY, Valérie, F-60250 La Chapelle en Serval (FR); LEGRAND, Jean-Luc, F-60600 Agnetz (FR)
(74) Mandataire: Cardin, Elise
(86) Numéro de dépôt international: PCT/FR2000/003170
(87) Numéro de publication internationale: WO 2001/036859

(56) Documents cités:
- WO-A-96/01389
- US-A- 1 718 507
- US-A- 4 272 935

## Description

La présente invention se rapporte au domaine de l'isolation, principalement isolation thermique, et concerne plus particulièrement l'isolation d'objets à surfaces tridimensionnelles susceptibles d'être exposés à de hautes températures.

Il est courant d'isoler des enceintes dans lesquelles règnent au moins temporairement de très hautes températures, au moyen de laine minérale dont la tenue en température est très appréciée.
Il est assez aisé d'isoler des surfaces bidimensionnelles avec les produits couramment disponibles dans le commerce sous forme de panneaux ou de nappes enroulées.

Il est par contre difficile de conformer ces produits à des objets tridimensionnels, et ce d'autant plus que la forme de l'objet est complexe.

Ainsi, on peut prendre l'exemple des fours ménagers du type incorporés dans une cuisinière ou bien encastrables, pour lesquels une bonne isolation contribue au rendement énergétique de l'appareil et diminue sa consommation. tout en protégeant des éléments proches de la source de chaleur ainsi que l'environnement de l'appareil de températures trop élevées en particulier dans le cas de fours à pyrolyse.

L'isolation est disposée tout autour du moufle en tôle émaillée qui constitue la cavité du four. De façon classique, la couche isolante est faite à partir d'un matelas ou feutre de laine minérale découpé aux dimensions appropriées et appliqué contre les surfaces à isoler : généralement on " enroule " une nappe d'isolant autour du moufle et on raccorde une plaque sur la face arrière du moufle. Cette façon de procéder comporte un certain nombre d'inconvénients : au stade de la fabrication, la manipulation du produit à base de laine minérale provoque l'envol de particules fibreuses qui rend le poste de travail poussiéreux. Du point de vue des performances d'isolation, il est difficile d'obtenir un contact parfaitement continu avec l'isolant sur toute la surface du moufle : selon la façon dont l'opérateur opère, il peut subsister des lames d'air entre le moufle et l'isolant, qui sont responsables de déperditions thermiques.

En outre, pour assurer l'intégrité mécanique du revêtement isolant on utilise couramment des produits renfermant des liants organiques, qui peuvent être responsables d'émissions gazeuses indésirables au cours du fonctionnement de l'appareil.

Des problèmes du même ordre peuvent se poser pour l'isolation de divers autres objets ou appareils, par exemple pour des conduits de cheminées industrielles traversés par des gaz à très haute température.

Le document WO 93/01444 propose un procédé dans lequel l'isolation est formée par projection sur la surface extérieure du moufle d'un matériau fibreux minéral avec mouillage simultané des fibres par de l'eau et/ou un liant, suivie d'une étape de mise en forme de la couche projetée et enfin du séchage/durcissement de la couche mise en forme.

Le document WO-A-96 01389 décrit également un procédé pour réaliser une couche isolante sur une surface d'un objet en appliquant sur la surface un matériau mineral fibreux et un liant aqueux.

Bien qu'elle réduise effectivement les inconvénients liés à la manipulation directe de la laine minérale, cette technique suscite toujours un certain envol de poussières et pose des problèmes de nettoyage du poste de travail. En outre, le contrôle de la quantité de matériau déposée sur le moufle est délicat, en particulier en ce qui concerne l'homogénéité de la densité du matériau appliqué. L'invention a ainsi pour objet de proposer une technique d'isolation améliorée permettant d'obvier à au moins un des inconvénients énoncés ci-dessus au sujet des techniques connues.

A cet égard, l'invention a pour objet un procédé selon la revendication 1.

Selon l'invention, les fibres sont amenées à la surface de l'objet via une conduite d'insufflation à l'intérieur de l'enveloppe. Les risques d'envol de poussières sont très nettement réduits voire supprimés, ce qui rend le poste de travail plus agréable pour l'opérateur et moins coûteux en entretien.

Par ailleurs, l'enveloppe permet de contrôler en tout point l'épaisseur de matériau déposé et de définir la forme de la couche isolante au moment même où elle est appliquée contre la surface à isoler.

Selon une réalisation avantageuse, l'enveloppe est maintenue solidaire de l'objet après séchage de la couche isolante, afin de constituer une enveloppe extérieure protectrice pour ladite couche.

Dans la présente description, le terme "poreux" qualifie une matière dont la texture comporte de très nombreux petits trous ou interstices, qui peuvent être présents de manière inhérente dans ladite matière en raison de sa structure ou de sa méthode de fabrication, ou qui peuvent être pratiqués volontairement dans une matière pleine.

Dans ce mode préféré, on peut former au moins une partie de l'enveloppe avec un matériau en feuille percé ou perforé, notamment une feuille métallique, telle qu'une feuille d'aluminium ou une tôle en acier perforée.

Une feuille métallique telle qu'une tôle présente généralement une rigidité suffisante pour résister à la pression d'insufflation en conservant sa forme initiale. Ce type d'enveloppe ou de partie d'enveloppe permet donc avantageusement de donner à la couche isolante sa forme définitive pendant l'insufflation. Si l'on utilise une feuille plus fine, on peut lui adjoindre un élément rigidifiant pour maîtriser la forme de la couche insufflée.

Le nombre, la taille et l'emplacement des trous ou perforations dépendent en particulier de la nature et de la forme de l'objet à isoler.

Le ou les trous d'évacuation de gaz d'insufflation sont avantageusement choisis de dimensions inférieures à celles des flocons de laine minérale, ou bien peuvent être pourvus d'un écran ou filtre, tel qu'une grille ou autre moyen équivalent, arrêtant les flocons mais laissant s'échapper le gaz d'insufflation.

En variante, qui peut éventuellement être combinée avec la forme de réalisation utilisant une feuille percée, on peut former au moins une partie de l'enveloppe avec un voile de verre.

Par " voile de verre on entend ici un matériau en feuille à base de filaments de verre dont la texture est telle qu'elle renferme des interstices entre les filaments permettant le passage d'un gaz sous pression. Ce matériau répond à la définition d'un matériau poreux donnée plus haut. Les filaments de verre peuvent être discontinus tels que ceux constituant la laine de verre, ou continus tels que ceux constituant la fibre de verre textile, les filaments continus pouvant éventuellement être coupés pour constituer le voile. La définition du " voile " utilisable selon l'invention peut recouvrir en fait des produits connus sous le nom de feutres, mats, ou même tissus de verre si ces derniers sont assez lâches pour laisser passer un gaz d'insufflation.

Un voile de verre présente l'avantage de permettre l'évacuation du gaz d'insufflation par une multitude de petits interstices capables d'empêcher le passage vers l'extérieur de l'enveloppe d'éléments fibreux provenant des flocons insufflés. C'est ainsi que l'on peut par exemple utiliser un voile de verre pour former un filtre ou écran devant un trou d'une feuille perforée dans le mode de réalisation précédent.

Aux fins de la présente invention, un voile de verre peut présenter une ou les caractéristiques suivantes :
- porosité de l'ordre de 1 à 3 mm de colonne d'eau (9,8 à 29.4 Pa) mesurée selon la méthode suivante :
   Un ventilateur de succion aspire de l'air à travers une surface de voile délimitée par un joint étanche de façon à créer un courant d'air de 6000 l/min de débit pour 10 dm² de surface. On mesure la chute de pression à travers le voile par la différence de pression de l'air entre l'amont et l'aval du voile.
- grammage de l'ordre de 30 à 100 g/m², notamment 35 à 75 g/m²
- résistance à la rupture en traction supérieure à 500 N/5 cm mesurée avec une méthode dynamométrique conforme aux normes ASTM D 39 et D 1682-64.

Malgré sa résistance à la rupture, un voile de verre peut parfois manquer de rigidité et se déformer de manière incontrôlée par rapport à son état initial dans les conditions d'insufflation de sorte que l'on n'obtiendrait pas pour la couche isolante la forme initialement souhaitée.

En pareil cas, on peut rigidifier l'enveloppe pendant l'insufflation et de préférence le séchage ultérieur, au moyen d'une paroi rigide perforée disposée à l'extérieur de l'enveloppe, que l'on sépare de l'ensemble lorsque la couche isolante voit sa forme figée après séchage du liant. Comme la feuille en tôle perforée décrite précédemment, cette paroi permet de donner sa forme définitive à la couche isolante pendant l'insufflation, sans requérir d'étape ultérieure de mise en forme.

De manière générale dans le procédé de l'invention et en particulier dans chacune des variantes décrites précédemment, il est préférable d'insuffler l'isolant en dirigeant le courant gazeux d'insufflation sensiblement parallèlement à la surface à isoler. On peut tolérer un angle d'incidence du courant d'insufflation avec la surface de l'ordre de +15° à -15°, éventuellement de -30° à +30° en fonction des dimensions de l'objet et de l'épaisseur de la couche isolante à réaliser. Ainsi, on obtient un remplissage de l'intérieur de l'enveloppe homogène et surtout on évite les retours de flocons vers la buse d'insufflation susceptibles de boucher cette dernière.

On utilise avantageusement une pression de gaz d'insufflation, avantageusement de l'air, de l'ordre de 5000 à 12000 Pa, variable en fonction du volume à remplir.

On veille en général à ce que la vitesse linéaire du gaz le long de la surface soumise au courant d'insufflation soit d'au moins 2 m/s pour assurer un bon transport des flocons, de préférence de l'ordre d'au moins 5 m/s, très avantageusement 10 m/s. La vitesse à choisir pour le courant gazeux introduit au niveau de l'orifice d'entrée de l'enveloppe dépend des pertes de charges rencontrées dans l'enveloppe d'insufflation, notamment de la forme et des dimensions de la surface à isoler ainsi que des matériaux utilisés.

Pour fixer les idées, on peut indiquer que pour le remplissage de la cavité contenue dans une enveloppe telle que le rapport longueur/largeur est de l'ordre de 5 à 30, la vitesse d'insufflation au niveau de l'orifice d'entrée peut être choisie avec la relation suivante : 400 > Vitesse d'insufflation à l'entrée / longueur > 20 afin de garantir une vitesse minimale pour un transport efficace jusqu'au bout de la cavité mais limitée pour ne pas observer de refoulement.

Les flocons insufflés sont de préférence obtenus par broyage à partir de tout matériau à base de laine minérale, de préférence dénué de liant organique quand il s'agit d'isoler un objet soumis à de hautes températures susceptibles de causer la dégradation des matières organiques. On peut fabriquer les flocons à partir d'un feutre ou matelas de laine minérale, de préférence de verre, qui ne renferme qu'une très faible proportion d'additif organique stable ou au moins sans produit de dégradation toxique à haute température, ou bien renfermant un liant minéral, tels que décrits notamment dans les documents EP-A-0 403 347, EP-A-0 819 788, DE-A-39 18 485.

De préférence, le broyage est adapté pour que les flocons aient une granulométrie moyenne comprise entre 6 et 16 mm, en particulier de l'ordre de 8 à 12 mm. Cette granulométrie confère aux flocons une bonne aptitude au transport et à l'accumulation dans l'enveloppe.

Les flocons sont de préférence à base d'une laine minérale fine pour de bonnes performances d'isolation. Elle peut être caractérisée par un micronaire de l'ordre de 2 à 4, en particulier de 2 à 3, pour 5 g.

La mesure du micronaire appelée aussi "indice de finesse" rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est normalisée (DIN 53941 ou ASTM D 1448) et elle utilise un appareil dit "appareil micronaire". Les essais de l'invention ont été menés avec une machine SHEFFIELD, type FAM 60 P. Cette machine comporte une arrivée d'air (ou d'azote) sous pression, une vanne de réglage de cette pression, un débitmètre. une chambre cylindrique à axe vertical avec arrivée des gaz en partie inférieure. Les fibres pesées, (le plus souvent, 5 grammes ±0,01 g) sont pressées au fond de la chambre par un bouchon calibré qui laisse échapper le gaz. Un essai préliminaire permet d'ajuster le débit d'air à une valeur donnée, toujours la même avant de commencer l'essai du tampon de fibres. La mesure du micronaire ou de l'indice de finesse, consiste à relever l'indication du débitmètre normalisé, lorsque la fibre est en place. Pour travailler dans la même gamme de pertes de charge, il est nécessaire d'adapter la quantité de fibres testées en diminuant la masse lorsque le diamètre diminue c'est pourquoi on mentionne celle-ci en même temps que le résultat du débit.

Un micronaire inférieur à 2 n'est pas souhaitable car implique un risque trop élevé de création de poussières au cours de l'opération d'insufflation, notamment lors du démottage, mais aussi au niveau des orifices d'évacuation du gaz d'insufflation où le contrôle des sorties de poussières deviendrait délicat.

Le liant aqueux pulvérisé sur les flocons lors de l'insufflation est de préférence un liant minéral, tel qu'à base de silicate de métal alcalin, notamment de sodium ou potassium, ou à base de mono et/ou polyphosphate de métal alcalin. De tels liants sont décrits notamment dans FR-A-2 745 887, DE-A-39 18 485, FR-A-2 294 839, FR-A-2 294 840, FR-A-2 339 490 FR-A-2 339 491.

Il est avantageux d'utiliser un liant aussi concentré que possible afin de réduire le temps de séchage ultérieur, cependant que l'imprégnation des flocons par le liant, l'aptitude à la pulvérisation de celui-ci sont meilleures avec une dilution élevée.

Un bon compromis a été trouvé selon l'invention avec un liant aqueux renfermant de 30 à 40% en poids de silicate et de 60 à 70% en poids d'eau. Le silicate est avantageusement caractérisé par un rapport SiO₂:M₂O, où M représente un ou plusieurs métaux alcalins, de l'ordre de 2 à 2,5.

Le taux de liant apporté sur les flocons est avantageusement de l'ordre de 7 à 15% de liant sec par rapport au poids de flocons.

L'invention a également pour objet des produits munis d'un nouveau type d'isolation, qui peuvent être obtenus par un procédé tel que décrit plus haut.

A cet égard, l'invention porte sur un objet, tel qu'un moufle d'appareil de cuisson, comprenant un corps creux et des surfaces extérieures isolées par une couche à base de laine minérale, caractérisé en ce que la couche à base de laine minérale est formée de flocons de laine minérale lies entre eux par un liant minéral et est recouverte d'une enveloppe constituée par un voile de verre.

D'autres caractéristiques et avantages de l'invention apparaîtront de la description détaillée qui va suivre faite en regard des dessins annexés sur lesquels :
- la figure 1 représente une vue en perspective d'un moufle d'appareil de cuisson isolé selon l'invention ;
- la figure 2 représente schématiquement un dispositif pour la fabrication du moufle de la figure 1 ;
- la figure 3 représente un élément de conduit de cheminée isolé.

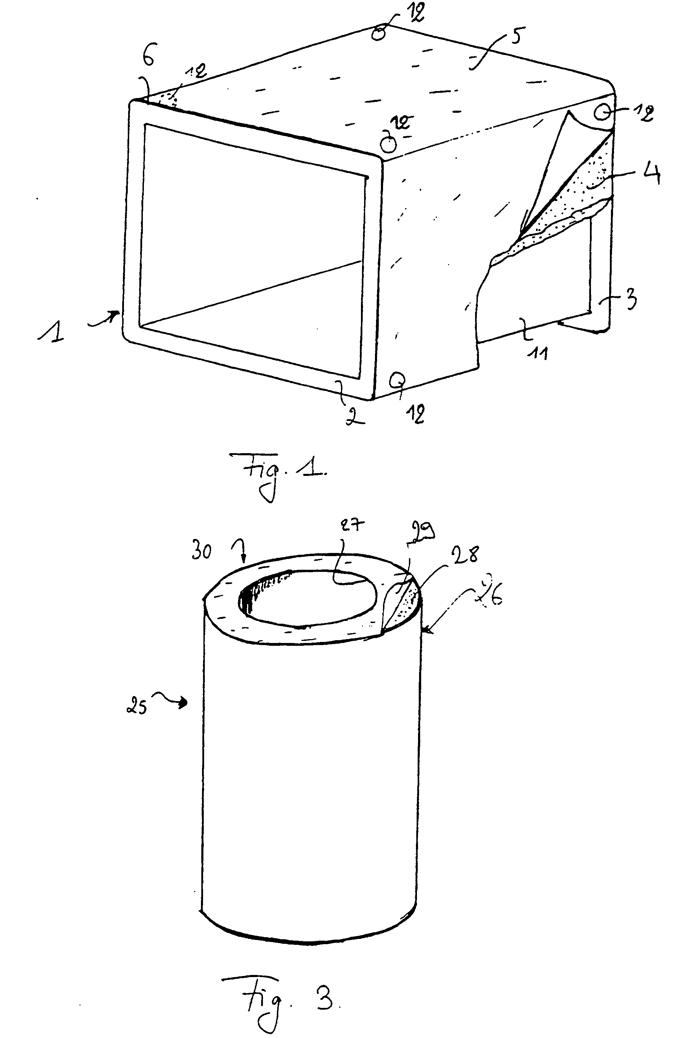

Le moufle 1 représenté sur la figure 1 est de forme parallélépipédique. creuse avec deux brides 2, 3 qui débordent autour du corps du moufle respectivement à l'avant et à l'arrière de ce dernier.

Le moufle est équipé d'une couche isolante 4 formée de flocons de laine minérale et d'un liant, et protégée par un voile de verre 5. Pour une représentation plus claire de ces éléments, une partie de la couche 4 a été arrachée en partie, et un coin du voile 5 a été décollé de la masse de flocons. Il est bien entendu que ce moufle est muni sur toutes les faces latérales de la couche isolante 4.

Le voile 5 est enroulé tout autour du moufle en prenant appui sur le pourtour des brides 2, 3, et peut être collé à celles-ci par exemple au moyen d'une colle minérale 6 à base de silicate alcalin.

La face arrière du moufle, non visible sur la représentation, est isolée de la même façon.

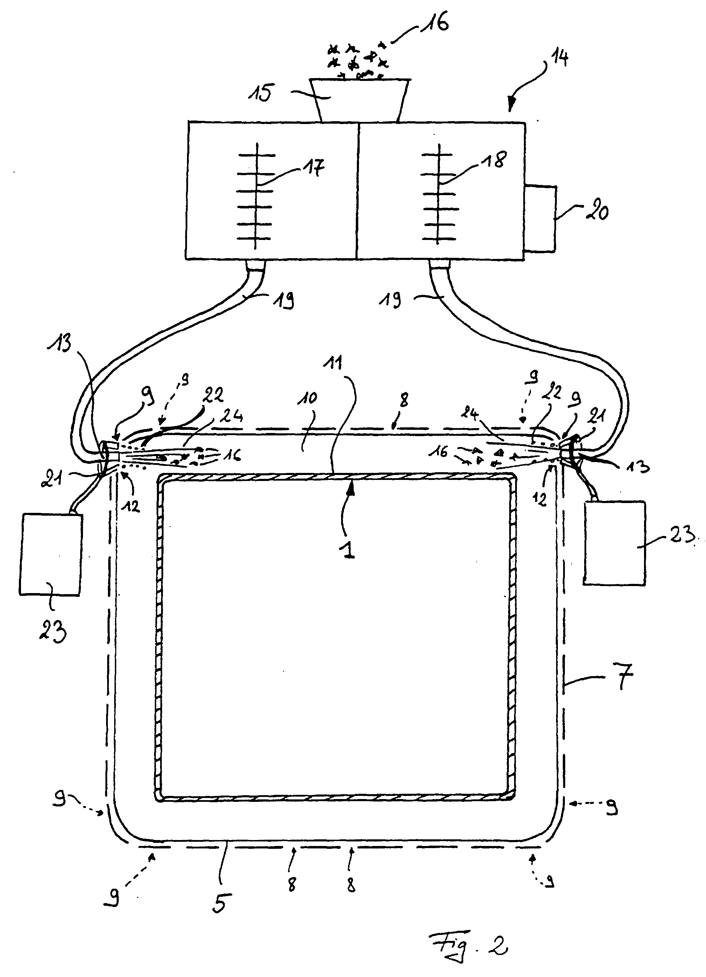

La fabrication de cet objet est illustrée schématiquement sur la figure 2 :
- après avoir obturé tous les orifices éventuellement présents sur le moufle (tel que trou de passage pour support de tourne-broche) on enroule le voile de verre 5 autour du moufle en le collant sur la bordure des brides 2, 3 ;
- on place ensuite le moufle équipé du voile dans un carter 7 en tôle perforée, dont les trous 8 peuvent par exemple avoir un diamètre de l'ordre de 10 mm et être espacés les uns des autres d'une distance de 5 à 20 mm. Le carter 7 a une forme adaptée pour que ses parois épousent quasiment la forme du voile 5.

Le carter 7 est muni d'orifices 9 dans deux angles opposés d'une même face qui coïncident avec l'espace 10 entre l'enveloppe de voile de verre 5 et la surface extérieure 11 du moufle 1.

Le voile 5 a été préalablement percé de trous 12 correspondants.

On introduit en bordure ou à travers les ouvertures 9 et 12 alignées des buses 13 d'insufflation, reliées à une machine de soufflage 14.

La machine de soufflage 14 comporte une alimentation 15 en flocons de laine minérale 16, des organes 17,18 de démottage destinés à séparer les flocons qui sont usuellement commercialisés dans des sacs ou balles compactées et de convoyage des flocons vers des conduites 19, et une soufflerie 20 qui dirige dans les mêmes conduites un courant d'air sous pression.

La buse 13 est équipée de moyens 21 de pulvérisation d'un liant liquide aqueux 22 stocké en 23, par exemple une solution aqueuse de silicate de sodium (rapport SiO₂:Na₂O de l'ordre de 2 à 2,5) à environ 35% de poids sec de silicate. A cette concentration où la solution est visqueuse mais pulvérisable, l'apport d'eau à l'intérieur de la couche de flocons isolants peut être contrôlé pour un temps de séchage modéré.

Les buses 13 étant agencées de manière sensiblement parallèle à une surface extérieure 11 du moufle 1, on procède à l'insufflation d'un courant gazeux 24 porteur de flocons avec pulvérisation simultanée de liant à l'intérieur de l'enveloppe formée par le voile 5.

Les parois du carter 7 maintiennent le voile 5 dans sa forme initiale. cependant que l'air d'insufflation s'évacue au dehors à travers les pores du voile 5 et les perforations 8 du carter. La porosité d'un voile de verre est telle qu'aucun flocons ni débris fibreux ne s'envole dans l'atmosphère du poste de travail à travers l'enveloppe.

Dans un exemple particulier, on utilise un voile de verre 5 ayant une porosité de l'ordre de 2 mm de colonne d'eau. Pour un moufle standard, qui mesure environ 50 cm de côté (longueur de cavité à l'intérieur de l'enveloppe), on insuffle à l'entrée d'un orifice 9 un courant de vitesse d'insufflation de 40 à 70 m/s (mesurée dans la direction d'insufflation parallèlement à la surface 11). Dans ces conditions, on peut estimer que la vitesse de l'air à l'extrémité opposée de la cavité à l'intérieur de l'enveloppe est de l'ordre de 10 à 25 m/s.

On peut faire varier le débit d'air d'insufflation au fur et à mesure du remplissage de l'enveloppe, par exemple en commençant par un débit fort (vitesse de l'ordre de 70 m/s) puis en baissant le débit au bout d'un certain temps pour finir le remplissage des zones à combler dans des conditions douces (vitesse finale de l'ordre de 40 m/s).

On peut insuffler ainsi simultanément sur les quatre faces du moufle les flocons isolants, ainsi que sur l'arrière du moufle.

Lorsque la quantité souhaitée de flocons a été introduite (déterminée en fonction de la densité voulue pour la couche isolante 4), on interrompt l'insufflation.

On place alors le moufle 1 avec le carter métallique 7 dans une étuve, de préférence ventilée, à une température de 80 à 120°C pendant le temps nécessaire à l'évaporation de l'eau du liant 22. Les pores du voile 5 et les perforations 8 du carter 7 permettent à la vapeur d'eau de s'échapper de la couche 4. Pendant cette opération, le liant sèche ou durcit et fige la forme de la couche 4 à l'intérieur du carter 7.

En sortie d'étuve, on peut retirer le carter 7 et le produit de la figure 1 est obtenu. On observe en particulier que l'épaisseur de la couche 4 est très régulière, sans vides, avec une surface extérieure sans creux ni renflements. d'aspect très satisfaisant. Le contrôle de la densité de l'application de la couche permet une production d'une régularité améliorée.

La manipulation du moufle est également rendue très agréable par le voile 5 qui protège le manipulateur d'un contact avec les fibres. A l'inverse, la couche isolante est protégée par le voile 5 de toute dégradation accidentelle à la manipulation, ce qui rend le niveau de précaution à prendre par les opérateurs très acceptable.

Avec les paramètres suivants, le moufle 1 présente des performances de consommation électrique au moins équivalentes à celles d'un moufle isolé classiquement avec un feutre aiguilleté plaqué contre les parois du moufle.

| | |
|---|---|
| Débit d'air | Variable de 44 m³/h (70 m/s) à 29 m³/h (45m/s) du début à la fin de l'insufflation |
| Liant | Silicate de sodium 35% Eau 65% |
| Apport de liant (en poids de liant sec par rapport au poids de flocons) | 10% |
| Densité moyenne de la couche sèche | 80 kg/m³ |

La figure 3 illustre l'isolation d'un élément 25 de conduit de cheminée.

Cet élément est formé d'une double enveloppe métallique 26,27 qui renferme un garnissage isolant 28 protégé en bout 30 par un voile de verre 29.

Le garnissage de la double enveloppe peut se faire comme décrit précédemment en insufflant parallèlement à la génératrice des conduits 26,27, les pores du voile de verre 29 servant d'orifices d'évacuation du gaz d'insufflation.

## Revendications

1. Procédé pour réaliser une couche isolante (4, 28) sur une surface (11) d'un objet (1,25), dans lequel on applique sur ladite surface (11,27) un matériau minéral fibreux (16) et un liant aqueux (22), **caractérisé en ce qu**'il comprend les étapes suivantes :
- on dispose en regard de la surface (11,27) de l'objet une enveloppe (5 ; 26,29) close munie d'au moins un orifice d'entrée (12), au moins une partie de ladite enveloppe (5 ; 26,29) étant perméable au gaz d'insufflation, notamment percée d'une multiplicité de trous et/ou poreuse, pour permettre l'évacuation du gaz d'insufflation,
- on insuffle entre la surface (11,27) et l'enveloppe (5 ;26,29) des flocons(16) de laine minérale véhiculés par un courant gazeux (24) cependant qu'on dirige sur les flocons (16) au moins un jet de liant aqueux (22), pour former une couche délimitée par l'enveloppe,
- on sèche l'ensemble (1,7 ; 26,27,29) pour éliminer une partie substantielle de l'eau du liant.

2. Procédé selon la revendication 1, **caractérisé en ce qu**'au moins une partie de ladite enveloppe est formée d'une feuille perforée (5,29).

3. Procédé selon la revendication 1, **caractérisé en ce qu**'une partie de l'enveloppe étant constituée d'un voile de verre (5), on place à l'extérieur de l'enveloppe (5) une paroi (7) perforée avant de procéder à l'insufflation, puis on sèche l'ensemble y compris la paroi (7), et on retire la paroi (7).

4. Procédé selon l'une quelconque des revendications précédentes, **caractérisé en ce que** la pression de gaz d'insufflation est de l'ordre de 5000 à 12000 Pa.

5. Procédé selon l'une quelconque des revendications précédentes, **caractérisé en ce que** l'on insuffle l'isolant en dirigeant le courant gazeux (24) sensiblement parallèlement à la surface (11,27).

6. Procédé selon la revendication 6, **caractérisé en ce que** la vitesse linéaire du gaz d'insufflation (24) à l'intérieur de l'enveloppe est d'au moins 2 m/s.

7. Procédé selon l'une quelconque des revendications précédentes, **caractérisé en ce que le** liant (22) est un liant à base minérale, notamment à base de silicate de métal alcalin, ou de phosphate de métal alcalin.

8. Procédé selon l'une quelconque des revendications précédentes, **caractérisé en ce que** les flocons de laine minérale (16) sont obtenus par broyage à partir d'un matériau à base de laine minérale dénué de liant organique, tel qu'un feutre ou matelas renfermant une très faible quantité d'additif ou un liant minéral.

9. Objet sensiblement parallélépipédique (1) comprenant un corps creux et des surfaces extérieures isolées par une couche (4) à base de laine minérale, **caractérisé en ce que** la couché à base de laine minérale, selon le procédé de la revendication 1, pouvant être obtenue est formée de flocons (16) de laine minérale liés entre eux par un liant minéral (22) et est recouverte d'une enveloppe constituée par un voile de verre (5).

10. Objet selon la revendication 9, **caractérisé en ce qu'**il est un moufle d'appareil de cuisson.

## Patentansprüche

1. Verfahren zur Herstellung einer Isolierschicht (4, 28) auf einer Oberfläche (11) eines Gegenstands (1, 25), wobei auf die Oberfläche (11, 27) ein faserförmiges anorganisches Material (16) und ein wässriges Bindemittel (22) aufgebracht werden, **dadurch gekennzeichnet, dass** es die Stufen:
- Anordnen einer geschlossenen Umhüllung (5; 26, 29), die mit mindestens einer Eintrittsöffnung (12) versehen ist, mit einem gewissen Abstand von der Oberfläche (11, 27) des Gegenstands, wobei wenigstens ein Teil der Umhüllung (5; 26, 29) für ein eingeleitetes Gas durchlässig und insbesondere mit einer Vielzahl von Löchern durchbohrt und/oder porös ist, um den Abzug des eingeleiteten Gases zu ermöglichen,
- Blasen von Mineralwolleflocken (16), die von einem Gasstrom (24) befördert werden, zwischen die Oberfläche (11, 27) und die Umhüllung (5; 26, 29), wobei auf die Flocken (16) mindestens ein wässriger Bindemittelstrahl (22) gerichtet wird, um eine von der Umhüllung begrenzte Schicht zu bilden, und
- Trocknen des Ganzen (1, 7; 26, 27, 29), um einen wesentlichen Teil des Wassers aus dem Bindemittel zu entfernen,
umfasst.

2. Verfahren nach Anspruch 1, **dadurch gekennzeichnet, dass** wenigstens ein Teil der Umhüllung von einer durchlöcherten dünnen Platte (5, 29) gebildet wird.

3. Verfahren nach Anspruch 1, **dadurch gekennzeichnet, dass** ein Teil der Umhüllung aus einem Glasvlies (5) besteht, auf der Außenseite der Umhüllung (5) vor Beginn der Gaseinleitung eine durchlöcherte Wand (7) angeordnet wird, anschließend das Ganze getrocknet, wobei die Wand (7) eingeschlossen ist, und die Wand (7) entfernt wird.

4. Verfahren nach einem der vorhergehenden Ansprüche, **dadurch gekennzeichnet, dass** der Druck des eingeleiteten Gases etwa 5 000 bis 12 000 Pa beträgt.

5. Verfahren nach einem der vorhergehenden Ansprüche, **dadurch gekennzeichnet, dass** das Isoliermittel eingeblasen wird, indem der Gasstrom (24) im Wesentlichen parallel zur Oberfläche (11, 27) geleitet wird.

6. Verfahren nach Anspruch 5, **dadurch gekennzeichnet, dass** die geradlinige Geschwindigkeit des eingeblasenen Gases (24) in der Umhüllung mindestens 2 m/s beträgt.

7. Verfahren nach einem der vorhergehenden Ansprüche, **dadurch gekennzeichnet, dass** das Bindemittel (22) ein Bindemittel auf anorganischer Basis, insbesondere auf der Basis eines Alkalimetallsilicats oder Alkalimetallphosphats, ist.

8. Verfahren nach einem der vorhergehenden Ansprüche, **dadurch gekennzeichnet, dass** die Mineralwolleflocken (16) durch Zermahlen eines Materials auf der Basis einer von organischem Bindemittel freien Mineralwolle wie eines Filzes oder einer Matte, der/die eine sehr geringe Menge eines Additivs oder eines anorganischen Bindemittels enthält, erhalten worden sind.

9. Gegenstand (1), der im Wesentlichen parallelepipedisch ist und einen Hohlkörper und Außenflächen, die mit einer Schicht (4) auf der Basis von Mineralwolle isoliert sind, umfasst, **dadurch gekennzeichnet, dass** die Schicht auf der Basis von Mineralwolle gemäß dem Verfahren nach Anspruch 1 herstellbar ist, von durch ein anorganisches Bindemittel (22) miteinander verbundenen Mineralwolleflocken (16) gebildet wird und mit einer aus einem Glasvlies (5) bestehenden Umhüllung bedeckt ist.

10. Gegenstand nach Anspruch 9, **dadurch gekennzeichnet, dass** er die Muffel eines Brenngeräts ist.

## Claims

1. Process for producing an insulating layer (4, 28) on a surface (11) of an object (1, 25), in which a fibrous mineral material (16) and an aqueous binder (22) are applied to said surface (11, 27), **characterised in that** it comprises the following steps:
- there is disposed facing the surface (11, 27) of the object a closed casing (5; 26, 29) provided with at least one inlet orifice (12), at least a portion of said casing (5; 26, 29) being permeable to the insufflation gas, especially being pierced by a plurality of holes and/or being porous, in order to allow the insufflation gas to be evacuated,
- flocks (16) of mineral wool carried by a gas stream (24) are blown in between the surface (11, 27) and the casing (5; 26, 29), while at least one jet of aqueous binder (22) is directed onto the flocks (16) in order to form a layer delimited by the casing,
- the assembly (1, 7; 26, 27, 29) is dried in order to remove a substantial portion of the water from the binder.

2. Process according to claim 1, **characterised in that** at least a portion of said casing is formed by a perforated sheet (5, 29).

3. Process according to claim 1, **characterised in that,** a portion of the casing being constituted by a covering of glass (5), a perforated wall (7) is placed outside the casing (5) before the insufflation is carried out, then the assembly, including the wall (7), is dried and the wall (7) is withdrawn.

4. Process according to any one of the preceding claims, **characterised in that** the pressure of the insufflation gas is of the order of from 5000 to 12,000 Pa.

5. Process according to any one of the preceding claims, **characterised in that** the insulating material is blown in by directing the gas stream (24) substantially parallel to the surface (11, 27).

6. Process according to claim 6, **characterised in that** the linear speed of the insufflation gas (24) inside the casing is at least 2 m/s.

7. Process according to any one of the preceding claims, **characterised in that** the binder (22) is a mineral-based binder, especially a binder based on alkali metal silicate or alkali metal phosphate.

8. Process according to any one of the preceding claims, **characterised in that** the flocks of mineral wool (16) are obtained by grinding from a mineral-wool-based material without organic binder, such as a felt or mat containing a very small amount of additive or a mineral binder.

9. Substantially parallelepipedal object (1) comprising a hollow body and outer surfaces insulated by a layer (4) based on mineral wool, **characterised in that** the layer based on mineral wool, obtainable according to the process of claim 1, is formed of flocks (16) of mineral wool which are bonded together by a mineral binder (22) and is covered with a casing constituted by a covering of glass (5).

10. Object according to claim 9, **characterised in that** it is a jacket for a cooking apparatus.
